# EUROPÄISCHE PATENTANMELDUNG

(11) **EP 4 506 847 A1**
(43) Veröffentlichungstag der Anmeldung: **12.02.2025**
(21) Anmeldenummer: 23190346.9
(22) Anmeldetag: 08.08.2023
(51) Int. Cl.: G06F 30/17, G06F 30/27, G06F 111/06, G06F 111/10

(54) **VERFAHREN ZUM BESTIMMEN EINER SIMULATIONSFÄHIGKEIT EINES SIMULATIONSMODELLS MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Loukrezis, Dimitrios, 80809 München (DE); Manvelyan, Diana, 80687 München (DE); Söllner, Uliana, 81825 München (DE)
(74) Vertreter: Siemens Patent Attorneys

(57) **Zusammenfassung**

Die Erfindung betrifft ein Verfahren zum Bestimmen einer Simulationsfähigkeit (12) eines Simulationsmodells (14) mittels einer elektronischen Recheneinrichtung (10), mit den Schritten: Bereitstellen eines Ensemble-Klassifikators (18) für das Simulationsmodell (14) mittels der elektronischen Recheneinrichtung (10); Empfangen von zumindest einem Simulationsparameter (30) für das Simulationsmodell (14) mittels einer Empfangseinrichtung (16) der elektronischen Recheneinrichtung (10); Auswerten des Simulationsparameters (30) in Abhängigkeit von dem Ensemble-Klassifikator (18) mittels der elektronischen Recheneinrichtung (10); und Bestimmen der Simulationsfähigkeit (12) des Simulationsmodells (14) in Abhängigkeit von der Auswertung mittels der elektronischen Recheneinrichtung (10).

Ferner betrifft die Erfindung ein Computerprogrammprodukt, ein computerlesbares Speichermedium sowie eine elektronische Recheneinrichtung (10).

## Beschreibung

Die Erfindung betrifft ein Verfahren zum Bestimmen einer Simulationsfähigkeit eines Simulationsmodells mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Transiente numerische Simulationen werden routinemäßig zur Untersuchung von Systemen und Phänomenen eingesetzt, die sowohl in einem bestimmten geometrischen Bereich als auch in einen bestimmten Zeitbereich aufgelöst werden müssen. Zu den Anwendungsgebieten gehören unter anderem die Strömungsdynamik, die Mechanik und die Elektrodynamik sowie multiphysikalische und gekoppelte Probleme. Dedizierte numerische Löser wurden in Abhängigkeit von verschiedenen Faktoren, wie der Physik und Geometrie des Problems, entwickelt und sind in zahlreichen Open-Source- und kommerziellen numerischen Simulationswerkzeugen enthalten.

Häufig werden numerische Simulationswerkzeuge zum Beispiel bei physikalischen Experimenten an spezifischer Hardware eingesetzt, wie es bei (simulationsbasierten) digitalen Zwillingen üblich ist. Ein beispielhafter Testfall, der bereits verwendet wird, ist der Einsatz eines Elektromotor-Simulationsmodells neben dem physischen Motor, der als weicher, virtueller Temperatursensor für Temperaturmessungen an Teilen des Motors dient, an dem die Platzierung eines physischen Sensors nicht möglich ist. Damit der virtuelle Sensor hinreichend genau ist, müssen die numerischen Simulationsparameter entsprechend dem Versuchs-/Hardware-Aufbau so gewählt werden, dass die Physik genau erfasst und aufgelöst wird. Eine häufig anzutreffenden Schwierigkeit besteht darin, dass Änderungen des Hardware-Aufbaus, zum Beispiel die Erhöhung oder Verringerung der Last des Motors, zu erheblichen Änderungen der numerischen Simulationsparameter führen können, so dass die Genauigkeit der Simulationsergebnisse erhalten bleibt.

Neben der genauen Darstellung und Problemgeometrie, insbesondere im eindimensionalen, zweidimensionalen und dreidimensionalen Raum, und der Auswahl einer geeigneten numerischen Näherungsmethode (zum Beispiel FEM - Finite Element Method oder FVM - Finite Volume Method) hängt der erfolgreiche Aufbau und die Durchführung einer instationären, numerischen Simulation entscheidend von der Wahl der räumlichen Netzauflösung und der zeitlichen Integration ab, die jeweils durch die maximale Größe der räumlichen und zeitlichen Gitterelemente, insbesondere gleichbedeutend mit Netzelementen und Zeitschritten, definiert sind. Wichtig ist, dass der Zeitschritt und die Größe der Gitterelemente so gewählt werden, dass die Stabilität der numerischen Lösung gewährleistet ist. Außerdem muss diese Auswahl entsprechend den vordefinierten Genauigkeitsanforderungen getroffen werden. Eine falsche Auswahl führt zu inakzeptablen Ergebnissen, zum Beispiel kann keine Konvergenz erreicht werden, oder die physikalischen Modellausgaben sind falsch, was zu wiederholten, rechenintensiven Simulationen, die Zeit, Rechenressourcen und menschlichen Einsatzkosten kosten, führt.

Derzeit ist die Wahl der Gitterelemente und des Zeitschritts manuell und hängt weitgehend von der Erfahrung des Anwenders ab. Infolgedessen gehen zahlreiche Arbeitsstunden und CPU-Stunden durch falsche Simulationseinstellungen verloren, die zu instabilen Lösungsverfahren führen. Es ist daher notwendig, die Benutzer von Simulationssoftware mit einem geeigneten Werkzeug und einer Methode zu unterstützen, so dass die Auswahl der Maschenweite und der Zeitauflösung die stabile Lösung von instationären Problemen gewährleistet.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen automatisiert eine Simulationsfähigkeit eines Simulationsmodells, insbesondere vor der eigentlichen Simulation, durchgeführt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Simulationsfähigkeit eines Simulationsmodells mittels einer elektronischen Recheneinrichtung. Es wird ein Ensemble-Klassifikator für das Simulationsmodell mittels der elektronischen Recheneinrichtung bereitgestellt. Es wird zumindest ein Simulationsparameter für das Simulationsmodell mittels einer Empfangseinrichtung der elektronischen Recheneinrichtung empfangen. Es erfolgt das Auswerten des Simulationsparameters in Abhängigkeit von dem Ensemble-Klassifikator mittels der elektronischen Recheneinrichtung und ein Bestimmen der Simulationsfähigkeit des Simulationsmodells in Abhängigkeit von der Auswertung mittels der elektronischen Recheneinrichtung.

Somit kann, insbesondere zeitlich bereits vor der eigentlichen Simulation, die Simulationsfähigkeit auf Basis des Ensemble-Klassifikators und in Abhängigkeit von dem Simulationsparameter bestimmt werden. Insbesondere kann es somit erfindungsgemäß vorgesehen sein, dass beispielsweise bestimmt werden kann, ob das Simulationsmodell mit dem Simulationsparameter einen instabilen Zustand, und somit im Wesentlichen nicht berechenbar, oder einen stabilen Zustand, und somit im Wesentlichen berechenbar, einnimmt.

Insbesondere ist es somit vorgesehen, dass die Erfindung dazu dient, dem Benutzer der Simulationssoftware bzw. des Simulationsmodells mitzuteilen, ob die gewählte Kombination aus dem Simulationsparameter zu einer stabilen, instationären, numerischen Simulation führt oder nicht. Zu diesem Zweck wird der Ensemble-Klassifikator von auf maschinellen lernbasierten Klassifikationsmodellen eingesetzt, und somit zueinander unterschiedliche Klassifikatoren aufweist.

Der Ensemble-Klassifikator wird somit über insbesondere eine geeignete API mit dem Simulationsmodell gekoppelt. Über die API werden insbesondere der Simulationsparameter in den Ensemble-Klassifikator eingegeben, der dann den Simulationsbenutzer darüber informiert, ob die gewählten Simulationseinstellungen in Bezug auf räumlicher und zeitlicher Diskretisierung angesichts der Besonderheiten des Problems für eine stabile Simulation ausreichend sind. Das heißt, wenn der Ensemble-Klassifikator die Klasse "stabil" vorhersagt, kann die eigentliche Simulation mit den gewählten Einstellungen durchgeführt werden. Im Gegensatz dazu sollten im Falle einer "instabilen" Vorhersage die Simulationseinstellungen geändert werden.

Insbesondere besteht somit die Neuerung in der Verwendung eines maschinellen lernbasierten Ensemble-Klassifikators, der vorhersagt, ob eine instationäre Simulation bei bestimmten Einstellungen stabil sein wird. Der Ensemble-Klassifikator wird anhand von Daten trainiert, validiert und getestet, die insbesondere bei früheren Simulationsergebnissen aufgetreten sind.

Auf diese Weise akkumuliert die Erfindung im Wesentlichen die in den früheren Simulationsdaten enthaltene Benutzererfahrung und stellt diese kollektive Benutzererfahrung dem aktuellen Benutzer zur Verfügung, unabhängig von seiner eigenen Erfahrung. Dies ist insbesondere für Nutzer von Simulationssoftware entscheidend, die keine Experten in den zugrundeliegenden numerischen Methoden sind.

Gemäß einer vorteilhaften Ausgestaltungsform wird der Ensemble-Klassifikator zumindest mit einem Entscheidungsbaum und/oder einer Support-Vector-Machine und/oder einem neuronalen Netz bereitgestellt. Insbesondere der Ensemble-Klassifikator weist in einem bevorzugten Ausführungsbeispiel einen Entscheidungsbaum und eine Support-Vector-Machine und ein neuronales Netz auf. Jeder Klassifikator wird dabei entsprechend separat trainiert auf Basis von historischen Daten. Beim Entscheidungsbaum handelt es sich um einen nichtparametrischen überwachten Lernalgorithmus, der insbesondere für die Klassifizierung als auch für Regressionsaufgaben verwendet wird. Der Entscheidungsbaum verfügt dabei über eine hierarchische, baumartige Struktur, die aus einem Wurzelknoten, Zweigen, internen Knoten und Blattknoten besteht. Der Entscheidungsbaum weist dabei Entscheidungsregeln auf. Auf Basis dieser Entscheidungsregeln kann somit eine Klassifikation des Simulationsmodells durchgeführt werden. Bei der Support-Vector-Machine, welche auch als Stützvektormaschine bezeichnet werden kann, handelt es sich ebenfalls um einen Klassifikator und Regressor. Eine Support-Vector-Machine unterteilt dabei eine Menge von Objekten so in Klassen, so dass um die Klassengrenzen herum ein möglichst breiter Bereich von Objekten bleibt. Bei der Support-Vector-Machine handelt es sich insbesondere um einen Large-Margin-Classifier. Es handelt sich dabei um ein mathematisches Verfahren der Mustererkennung. Des Weiteren kann, wie bereits erwähnt, ein neuronales Netzwerk verwendet werden, um eine entsprechende Bestimmung durchzuführen. Beim neuronalen Netzwerk handelt es sich insbesondere um eine künstliche Intelligenz, welche entsprechend durch Trainieren ein Ergebnis liefern kann und hierzu neuronale Knoten mit entsprechenden Verlustfunktionen und Gewichtungen aufweisen. Bei dem neuronalen Netz kann es sich beispielsweise um ein faltendes neuronales Netz (convolutional neural network) handeln. Somit kann auf verschiedene Arten und Weisen der Ensemble-Klassifikator eine entsprechende Bewertung durchführen, wodurch präzise eine Simulationsfähigkeit bestimmt werden kann.

Ebenfalls vorteilhaft ist, wenn der Ensemble-Klassifikator auf Basis von historischen Simulationsergebnissen angelernt wird. Insbesondere findet auf Basis der historischen Simulationsergebnisse ein Training, Validierung und ein Test der entsprechenden Klassifikatoren statt. Hierbei können die entsprechenden Simulationsparameter als Eingangsparameter dienen und die Ergebnisse entsprechend ebenfalls bereitgestellt werden. Der Klassifikator kann nun über ein entsprechendes maschinelles Lernen auf Basis des Simulationsparameters die Simulationsergebnisse entsprechend reproduzieren. Somit kann zuverlässig der Klassifikator entsprechend angelernt werden.

Ebenfalls vorteilhaft ist, dass eine Datenbank mit historischen Simulationsergebnissen bereitgestellt wird. Die Datenbank weist dabei insbesondere die instationären Simulationseinstellungen bzw. Simulationsparameter auf, die aus früheren Simulationsergebnissen erstellt wurden. Die Datenbank kann dabei sehr einfach mit neuen Daten oder sogar mit neuen Einträgen erweitert werden. Die Datenbank wird zum Trainieren, Validieren und Testen der Klassifikatoren verwendet. Somit kann zuverlässig der Ensemble-Klassifikator bereitgestellt werden.

Ebenfalls vorteilhaft ist, wenn auf Basis der historischen Simulationsergebnisse eine Leistung eines Klassifikators des Ensemble-Klassifikators bewertet wird und in Abhängigkeit von dieser Bewertung ein Gewichtungsfaktor eines jeweiligen Klassifikators für den Ensemble-Klassifikator erzeugt wird. Insbesondere nachdem die unterschiedlichen Klassifikatoren des Ensemble-Klassifikators trainiert, validiert und getestet worden sind, werden sie entsprechend ihrer Genauigkeit gewichtet. Dieses Gewichtungsverfahren stellt sicher, dass alle Modelle im angemessenen Umfang berücksichtigt werden. Bei Unstimmigkeiten zwischen den Klassifikatoren bei der Klassifizierung wird das Gewichtungsverfahren außerdem zur Lösung von Konflikten zwischen den Klassifikatoren verwendet. Somit kann zuverlässig die Bestimmung der Simulationsgenauigkeit durchgeführt werden.

Weiterhin vorteilhaft ist, wenn das Simulationsmodell bezüglich einer zeitlichen Diskretisierung und/oder räumlichen Diskretisierung auf Simulationsfähigkeit bewertet wird. Insbesondere die zeitliche Diskretisierung und/oder die räumliche Diskretisierung sind von entscheidender Bedeutung, ob das Simulationsmodell stabil ist. Insbesondere wird somit die gewählte Kombination aus zeitlicher Diskretisierung und räumlicher Diskretisierung bewertet und klassifiziert, ob eine stabile, instationäre, numerische Simulation durchgeführt werden kann oder nicht.

Eine weitere vorteilhafte Ausgestaltungsform sieht vor, dass als Simulationsparameter eine physikalische Eigenschaft für das Simulationsmodell und/oder eine geometrische Eigenschaft für das Simulationsmodell und/oder eine numerische Näherungsmethode für das Simulationsmodell und/oder ein Gitterelementtyp für das Simulationsmodell und/oder eine Elementgröße für das Simulationsmodell und/oder eine Zeitfenstergröße für das Simulationsmodell empfangen werden. Insbesondere können die entsprechenden historischen Daten aus der Datenbank genutzt werden. Bei den physikalischen Eigenschaften handelt es sich beispielsweise darum, ob es sich um eine Thermik-, Elektromagnetik-, Mechanik- oder ein Multiphysik-Kombinationsmodell handelt. Bei der Geometrie können insbesondere eindimensionale, zweidimensionale oder dreidimensionale Eigenschaften bewertet werden. Bei der numerischen Näherungsmethode kann insbesondere ausgewählt werden, welche Methode, beispielsweise FEM oder FVM, genutzt wird. Die Zeitintegrationsmethode bestimmt wiederum einen Wert aus der Liste der verfügbaren Methoden, beispielsweise Runge-Kutta- oder Eulerverfahren. Der Gitterelementtyp gibt wiederum einen Wert aus der Liste der verfügbaren Gitterelemente, beispielsweise Tetraeder oder Hexaeder, an. Ferner kann eine Verfeinerung des Gitters insbesondere der Wert der maximalen Elementgrößen empfangen werden. Des Weiteren kann auch die Verfeinerung des Zeitrasters, beispielsweise der Wert des Zeitschritts, insbesondere maximaler Zeitschritt, wenn ein adaptiver Zeitintegrator verwendet wird, empfangen werden. Als Ergebnis kann wiederum die Stabilitätskennzeichnung bzw. Simulationsfähigkeit bestimmt werden als stabil oder instabil. Somit kann zuverlässig die Simulationsfähigkeit bestimmt werden.

Es hat sich weiterhin als vorteilhaft erwiesen, wenn zeitlich nach der Bestimmung der Simulationsfähigkeit erst eine Simulation des Simulationsmodells durchgeführt wird. Insbesondere dient somit das erfindungsgemäße Verfahren als Vorabprüfung, bevor die eigentliche Simulation durchgeführt wird. Somit können insbesondere Zeit sowie Rechenressourcen eingespart werden, da bereits vor der eigentlichen Simulation die Simulationsfähigkeit bestimmt wird.

Weiterhin vorteilhaft ist, wenn bei der Bestimmung einer stabilen Simulationsfähigkeit eine Simulation des Simulationsmodells durchgeführt wird. Mit anderen Worten, lediglich wenn die Simulationsfähigkeit bestätigt wird, wird die eigentliche Simulation durchgeführt. Dies spart Zeit sowie Rechenressourcen.

Eine weitere vorteilhafte Ausgestaltungsform sieht vor, dass bei einer Bestimmung einer instabilen Simulationsfähigkeit mittels der elektronischen Recheneinrichtung vorgeschlagen wird, einen Simulationsparameter zu verändern. Beispielsweise kann hierbei dem Anwender angezeigt werden, dass beispielsweise die zeitliche Diskretisierung instabil ist, wodurch der Anwender einen neuen Simulationsparameter eingeben kann und somit einen neuen Stabilitätscheck durchführen kann. Alternativ kann auch die elektronische Recheneinrichtung eine Anpassung des Simulationsparameters vorschlagen bzw. durchführen. Somit können Simulationen verhindert werden, welche von vornherein einen instabilen Zustand erreichen, wodurch Zeit sowie Rechenressourcen eingespart werden können.

Es hat sich weiterhin als vorteilhaft erwiesen, wenn ein jeweiliger Klassifikator des Ensemble-Klassifikators separat zueinander trainiert wird. Insbesondere werden somit beispielsweise die drei Klassifikatoren auf Basis der Daten in der Datenbank separat trainiert und führen somit zu unterschiedlichen Ergebnissen. Auf Basis dessen können somit unabhängige Klassifikatoren bereitgestellt werden, wodurch wiederum zuverlässig eine Simulationsfähigkeit bestimmt werden kann.

Gemäß einer weiteren vorteilhaften Ausgestaltungsform wird das Simulationsmodell als digitaler Zwilling für ein Objekt bereitgestellt. Bei dem Objekt handelt es sich beispielsweise um einen elektrischen Motor, welcher in Realität existiert. Der digitale Zwilling wird somit parallel zum eigentlichen Motor bereitgestellt und es können entsprechende Simulationen des bereits in Betrieb befindlichen elektrischen Motors über den digitalen Zwilling durchgeführt werden. Insbesondere wird somit die Erfindung eine Vorabprüfung für den digitalen Zwilling durchführen, wodurch zuverlässig die Simulation des elektrischen Motors realisiert werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit dem Computerprogrammprodukt nach dem vorhergehenden Aspekt.

Ein nochmals weiterer Aspekt der Erfindung betrifft eine elektronische Recheneinrichtung zum Bestimmen einer Simulationsfähigkeit eines Simulationsmodells, mit zumindest einer Empfangseinrichtung und einem Ensemble-Klassifikator, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu insbesondere gegenständliche Merkmale auf, um entsprechende Verfahrensschritte durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronischer Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigt:

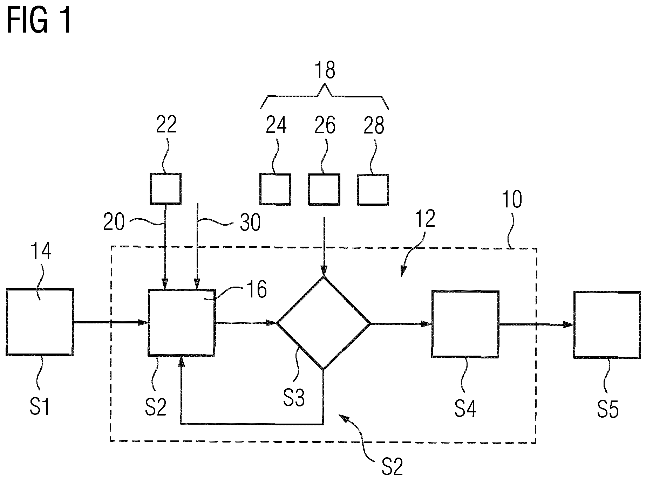

- FIG 1: ein schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

FIG 1 zeigt ein schematisches Ablaufdiagramm gemäß einer Ausführungsform des Verfahrens. Insbesondere wird zur Durchführung des Verfahrens eine elektronische Recheneinrichtung 10 genutzt. Die elektronische Recheneinrichtung 10 ist zum Bestimmen einer Simulationsfähigkeit 12 eines Simulationsmodells 14 vorgesehen. Die elektronische Recheneinrichtung 10 weist hierzu zumindest eine Empfangseinrichtung 16 und einen Ensemble-Klassifikator 18 auf.

Die FIG 1 zeigt insbesondere, dass in einem ersten Schritt S1 das Simulationsmodell 14 bereitgestellt werden kann. Das Simulationsmodell 14 ist dabei insbesondere abhängig von einem Hardware-Setup. In einem zweiten Schritt S2 wird wiederum zumindest ein Simulationsparameter 30 für das Simulationsmodell 14 mittels der Empfangseinrichtung 16 empfangen. Ferner können weitere Simulationsparameter 20 beispielsweise von einer Datenbank 22 empfangen werden. Es erfolgt dann in einem dritten Schritt S3 das Auswerten des Simulationsparameters 30 in Abhängigkeit von dem Ensemble-Klassifikator 18 mittels der elektronischen Recheneinrichtung 10 und das Bestimmen der Simulationsfähigkeit 12 des Simulationsmodells 14 in Abhängigkeit von der Auswertung mittels der elektronischen Recheneinrichtung 10. Dies ist insbesondere in einem vierten Schritt S4 gezeigt.

Sollte sich die Simulationsfähigkeit 12 als stabil erweisen, so wird ein vierter Schritt S4 durchgeführt, wobei im vierten Schritt S4 die eigentliche Simulation durchgeführt wird. Es erfolgt dann im fünften Schritt S5 eine entsprechende Ausgabe der Simulationsergebnisse. Sollte sich die Simulationsfähigkeit 12 als instabil erweisen, so wird ausgehend vom dritten Schritt S3 zurückgegangen in den zweiten Schritt S2 und beispielsweise ein neuer Simulationsparameter 30 vorgeschlagen bzw. dem Nutzer mitgeteilt, dass ein neuer Simulationsparameter 30 zu wählen ist.

Die FIG 1 zeigt insbesondere, dass der Ensemble-Klassifikator 18 zumindest einen Entscheidungsbaum 24 und/oder eine Support-Vector-Machine 26 und/oder ein neuronales Netzwerk 28 aufweist. Dabei kann vorgesehen sein, dass der Ensemble-Klassifikator 18 auf Basis von historischen Simulationsergebnissen 20 angelernt wird. Hierzu kann insbesondere die Datenbank 22 mit den historischen Simulationsergebnissen 20 bereitgestellt werden. Des Weiteren kann auf Basis der historischen Simulationsergebnisse 20 eine Leistung eines Klassifikators 24, 26, 28 des Ensemble-Klassifikators 18 bewertet werden und in Abhängigkeit von dieser Bewertung ein Gewichtungsfaktor eines jeweiligen Klassifikators 24, 26, 28 für den Ensemble-Klassifikator 18 erzeugt werden.

Als Simulationsparameter 30 kann insbesondere eine physikalische Eigenschaft für das Simulationsmodell 14 und/oder eine geometrische Eigenschaft für das Simulationsmodell 14 und/oder eine numerische Näherungsmethode für das Simulationsmodell 14 und/oder ein Gitterelementtyp für das Simulationsmodell 14 und/oder eine Elementgröße für das Simulationsmodell 14 und/oder eine Zeitfenstergröße für das Simulationsmodell 14 empfangen werden.

Es ist ferner insbesondere vorgesehen, dass zeitlich nach der Bestimmung der Simulationsfähigkeit 12 die Simulation, wie im vierten Schritt S4 gezeigt, mit dem Simulationsmodell 14 durchgeführt wird. Ferner kann insbesondere nur bei einer Bestimmung einer stabilen Simulationsfähigkeit 12 die Simulation des Simulationsmodells 14 durchgeführt werden. Des Weiteren kann bei einer Bestimmung einer instabilen Simulationsfähigkeit 12 mittels der elektronischen Recheneinrichtung 10 vorgeschlagen werden, einen Simulationsparameter 30 zu verändern.

Insgesamt zeigt somit die FIG 1, dass dem Benutzer des Simulationsmodells 14 bzw. der elektronischen Recheneinrichtung 10 mitgeteilt werden kann, ob die gewählte Kombination aus zeitlicher Diskretisierung und räumlicher Diskretisierung zu einer stabilen, instationären, numerischen Simulation führt oder nicht. Zu diesem Zweck wird der Ensemble-Klassifikator 18 von auf maschinellem Lernen basierenden Klassifizierungsmodellen eingesetzt, was aus verschiedenen Klassifikatoren 24, 26, 28 besteht. Jeder der Klassifikatoren 24, 26, 28 wird mit Daten aus der verfügbaren Datenbank 22, die aus früheren/historischen Simulationsergebnissen 20 stammt, trainiert, validiert und getestet. Die Datenbank 22 enthält dabei die folgenden Einträge bezüglich einer physikalischen Eigenschaft der Simulation: beispielsweise Thermik, Elektromagnetik, Mechanik sowie Multiphysik-Kommunikationen; und bezüglich Geometrie, insbesondere, ob es sich um ein eindimensionales, zweidimensionales oder dreidimensionales Modell handelt. Des Weiteren wird eine numerische Näherungsmethode bereitgestellt, insbesondere ein Wert aus der Liste der verfügbaren Methoden, zum Beispiel FEM oder FVM. Auch wird die Zeitintegrationsmethode bereitgestellt, insbesondere ein Wert aus der Liste der verfügbaren Methoden, beispielsweise Runge-Kutta oder Euler. Des Weiteren wird auch ein Netzelementtyp bereitgestellt, insbesondere ein Wert aus der Liste der verfügbaren Gitterelemente, zum Beispiel Tetraeder oder Hexaeder. Des Weiteren kann eine Verfeinerung des Gitters durchgeführt werden, insbesondere der Wert der maximalen Elementgröße eingestellt werden. Des Weiteren kann auch die Verfeinerung des Zeitrasters, insbesondere der Wert des Zeitschritts, beispielsweise ein maximaler Zeitschritt, wenn ein adaptiver Zeitintegrator verwendet wird, bereitgestellt werden. Als Ergebnis kann insbesondere wiederum die Stabilitätskennung entweder als stabil oder instabil bereitgestellt werden. Die Stabilitätskennzeichnung und insbesondere somit die Simulationsfähigkeit 12 dient als Klassifizierungsziel, das heißt der Wert, der von den Klassifikatoren 24, 26, 28 vorhergesagt werden soll. Nachdem die verschiedenen Klassifikatoren 24, 26, 28 trainiert, validiert und getestet worden sind, werden diese entsprechend ihrer Genauigkeit gewichtet. Dieses Gewichtungsverfahren stellt sicher, dass alle Klassifikatoren 24, 26, 28 in angemessenem Umfang berücksichtigt werden. Bei Unstimmigkeiten zwischen den Klassifikatoren 24, 26, 28 bei der Klassifizierung wird das Gewichtungsverfahren außerdem zur Lösung von Konflikten zwischen den Klassifikatoren 24, 26, 28 verwendet.

Sobald der Ensemble-Klassifikator 18 zur Verfügung steht, wird er über eine geeignete API mit der Simulationssoftware gekoppelt. Über die API werden die oben beschriebenen Simulationseinstellungen in den Ensemble-Klassifikator 18 eingegeben, der dann den Simulationsbenutzer darüber informiert, ob die gewählten Simulationseinstellungen in Bezug auf räumlicher und zeitlicher Diskretisierung angesichts der Besonderheiten des Problems für eine stabile Simulation ausreichend sind. Das heißt, wenn der Ensemble-Klassifikator 18 die Klasse "stabil" vorhersagt, kann die Simulation mit den gewählten Einstellungen fortgesetzt werden. Im Gegensatz dazu sollten im Falle einer "instabilen" Vorhersage die Simulationseinstellungen geändert werden.

Dabei ist insbesondere die Datenbank 22 mit instationären Simulationseinstellungen/Parametern, wie oben beschrieben, vorgegeben, die aus früheren Simulationsergebnissen erstellt wurde. Die Datenbank kann dabei sehr einfach mit neuen Daten oder sogar mit neuen Einträgen erweitert werden. Die Datenbank 22 wird zum Trainieren, Validieren und Testen der Klassifikatoren 24, 26, 28 verwendet.

Des Weiteren ist dazu der Ensemble-Klassifikator 18 vorgesehen, der aus drei gewichteten Klassifikatoren 24, 26, 28 ausgebildet ist. Die drei Klassifikatoren 24, 26, 28 werden separat trainiert, validiert und anhand der oben erwähnten Datenbank 22 getestet. Anschließend werden sie entsprechend ihrer Genauigkeit gewichtet, um den Ensemble-Klassifikator 18 auszubilden. Des Weiteren ist die API vorgesehen, die den trainierten, validierten und getesteten Ensemble-Klassifikator 18 in die Simulationssoftware integriert, so dass die Simulationseinstellungen in den Ensemble-Klassifikator 18 eingegeben werden und der Benutzer eine Stabilitätsvorhersage erhält, sobald der Simulationsaufbau abgeschlossen ist.

Im Kontext eines digitalen Zwillings besteht somit die vollständige Toolchain aus dem physikalischen Experiment und der entsprechend verwendeten Hardware. Des Weiteren wird das numerische Simulationswerkzeug für die instationären Vorgänge, das zum Beispiel als weicher Sensor für Größen fungiert, die im Rahmen des physikalischen Experiments nicht direkt beobachtet werden können, bereitgestellt. Der Hardware-Aufbau ist für den Simulationsaufbau von entscheidender Bedeutung, so dass modellbasierte Schätzungen mit hoher Wiedergabetreue geliefert werden. Der Ensemble-Klassifikator 18 ist bereitgestellt, bei dem die Simulationsparameter 30 eingegeben werden und der die entsprechende Simulation als stabil oder instabil klassifiziert. Anschließend führt das Klassifizierungsergebnis dazu, dass die Simulation entweder mit den gegebenen Einstellungen ausgeführt oder die Simulationseinstellungen angepasst werden, bis der Ensemble-Klassifikator 18 ein stabiles Ergebnis liefert.

Im Falle eines digitalen Zwillingssystems wird der Ensemble-Klassifikator 18 mit Hilfe der verfügbaren Datenbank 22 für Simulationsdaten trainiert und zur Bewertung der Stabilität des hardware-/experiment-informierten Simulationsaufbaus eingesetzt.

## Patentansprüche

1. Verfahren zum Bestimmen einer Simulationsfähigkeit (12) eines Simulationsmodells (14) mittels einer elektronischen Recheneinrichtung (10), mit den Schritten:
- Bereitstellen eines Ensemble-Klassifikators (18) für das Simulationsmodell (14) mittels der elektronischen Recheneinrichtung (10);
- Empfangen von zumindest einem Simulationsparameter (30) für das Simulationsmodell (14) mittels einer Empfangseinrichtung (16) der elektronischen Recheneinrichtung (10);
- Auswerten des Simulationsparameters (30) in Abhängigkeit von dem Ensemble-Klassifikator (18) mittels der elektronischen Recheneinrichtung (10); und
- Bestimmen der Simulationsfähigkeit (12) des Simulationsmodells (14) in Abhängigkeit von der Auswertung mittels der elektronischen Recheneinrichtung (10).

2. Verfahren nach Anspruch 1, **dadurch gekennzeichnet, dass**
der Ensemble-Klassifikator (18) zumindest mit einem Entscheidungsbaum (24) und/oder einer Support-Vector-Machine (26) und/oder einem neuronalen Netz (28) bereitgestellt wird.

3. Verfahren nach Anspruch 1 oder 2, **dadurch gekennzeichnet, dass**
der Ensemble-Klassifikator (18) auf Basis von historischen Simulationsergebnissen (20) angelernt wird.

4. Verfahren nach Anspruch 3, **dadurch gekennzeichnet, dass** eine Datenbank (22) mit historischen Simulationsergebnissen (20) bereitgestellt wird.

5. Verfahren nach Anspruch 3 oder 4, **dadurch gekennzeichnet, dass**
auf Basis der historischen Simulationsergebnisse (20) eine Leistung eines Klassifikators (24, 26, 28) des Ensemble-Klassifikators (18) bewertet wird und in Abhängigkeit von dieser Bewertung ein Gewichtungsfaktor eines jeweiligen Klassifikators (24, 26, 28) für den Ensmeble-Klassifikator (18) erzeugt wird.

6. Verfahren nach einem der vorhergehenden Ansprüche, **dadurch gekennzeichnet, dass**
das Simulationsmodell (14) bezüglich einer zeitlichen Diskretisierung und/oder einer räumlichen Diskretisierung auf Simulationsfähigkeit (12) bewertet wird.

7. Verfahren nach einem der vorhergehenden Ansprüche, **dadurch gekennzeichnet, dass**
als Simulationsparameter (30) eine physikalische Eigenschaft für das Simulationsmodell (14) und/oder eine geometrische Eigenschaft für das Simulationsmodell (14) und/oder eine numerische Näherungsmethode für das Simulationsmodell (14) und/oder ein Gitterelementtyp für das Simulationsmodell (14) und/oder eine Elementgröße für das Simulationsmodell (14) und/oder eine Zeitfenstergröße für das Simulationsmodell (14) empfangen werden.

8. Verfahren nach einem der vorhergehenden Ansprüche, **dadurch gekennzeichnet, dass**
zeitlich nach der Bestimmung der Simulationsfähigkeit (12) eine Simulation des Simulationsmodells (14) durchgeführt wird.

9. Verfahren nach einem der vorhergehenden Ansprüche, **dadurch gekennzeichnet, dass**
nur bei der Bestimmung einer stabilen Simulationsfähigkeit (12) eine Simulation des Simulationsmodells (14) durchgeführt wird.

10. Verfahren nach einem der vorhergehenden Ansprüche, **dadurch gekennzeichnet, dass**
bei einer Bestimmung einer instabilen Simulationsfähigkeit (12) mittels der elektronischen Recheneinrichtung (10) vorgeschlagen wird, einen Simulationsparameter (30) zu verändern.

11. Verfahren nach einem der vorhergehenden Ansprüche, **dadurch gekennzeichnet, dass**
ein jeweiliger Klassifikator (24, 26, 28) des Ensemble-Klassifikators (18) separat zueinander trainiert wird.

12. Verfahren nach einem der vorhergehenden Ansprüche, **dadurch gekennzeichnet, dass**
das Simulationsmodell (14) als digitaler Zwilling für ein Objekt bereitgestellt wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (10) zum Bestimmen einer Simulationsfähigkeit (12) eines Simulationsmodells (14), mit zumindest einer Empfangseinrichtung (16) und einem Ensemble-Klassifikator (18), wobei die elektronische Recheneinrichtung (10) bis 12 ausgebildet ist.
